# EUROPÄISCHE PATENTSCHRIFT

(11) **EP 0 501 137 B1**
(45) Veröffentlichungstag und Bekanntmachung des Hinweises auf die Patenterteilung: **27.09.1995**
(21) Anmeldenummer: 92101039.3
(22) Anmeldetag: 23.01.1992
(51) Int. Cl.: B29C 47/22, B29C 47/92

(54) **Vorrichtung für die Herstellung einer Kunststoffolie**
Device for the manufacture of a plastic film
Dispositif de fabrication à une feuille en matière plastique

(30) Priorität: 01.03.1991 DE 4106486
(43) Veröffentlichungstag der Anmeldung: 02.09.1992
(73) Patentinhaber: Reifenhäuser GmbH & Co., Maschinenfabrik, 53844 Troisdorf (DE)
(72) Erfinder: Reifenhäuser, Hans, D-53844 Troisdorf (DE)
(74) Vertreter: Andrejewski, Walter

(56) Entgegenhaltungen:
- EP-A- 0 367 022
- EP-A- 0 429 862
- DE-A- 1 218 702
- FR-A- 1 502 756
- GB-A- 2 237 236
- PATENT ABSTRACTS OF JAPAN vol. 4, no. 12 (C-71)29. Januar 1980; & JP-A-54 146 859 (MITSUBISHI JUKOGYO K.K.) 16. November 1979
- PATENT ABSTRACTS OF JAPAN vol. 13, no. 376 (M-862)(3724) 21. August 1989; & JP-A-1 128 821 (FUJIKURA LTD.) 22. Mai 1989

## Beschreibung

Die Erfindung betrifft eine Vorrichtung für die Herstellung einer Kunststoffolie aus thermoplastischem Kunststoff im Folienblasverfahren mit Dickenfehlerkorrektur im laufenden Betrieb, - mit einem Blaskopf, der eine Ringspaltdüse aufweist, und mit einer Einrichtung zum Aufblasen der Folienblase, wobei die Ringspaltdüse eine äußere und/oder innere Düsenaustrittslippe aus Stahl aufweist, welche Düsenaustrittslippe als ein im wesentlichen zylindrisches Bauteil von zumindest einigen Zentimetern Länge ausgeführt und elastisch verformbar ist, wobei um den Umfang der Düsenaustrittslippe äquidistant verteilt in radialer Richtung wirkende Stellelemente angeordnet sind, wobei die Ausgangsspaltdicke des Ringspaltdüsenspaltes durch eine Vorspannung der Düsenaustrittslippe eingestellt ist, die von den Stellelementen erzeugt ist, und wobei die Stellelemente einer Regeleinrichtung für die Dickenfehlerkorrektur angehören sowie über die Stellelemente zum Zwecke der Dickenfehlerkorrektur die Vorspannung der Düsenaustrittslippe veränderbar ist.

Bei dieser aus der Praxis (GB-A-2 162 119, welche die DE-A-3 427 912 als Priorität beansprucht) bekannten Vorrichtung, von der die Erfindung ausgeht, weist die Ringspaltdüse eine äußere und/oder eine innere Düsenaustrittslippe auf, die in axialer Richtung eine verhältnismäßig geringe Lippenlänge und eine geringe Lippendicke besitzt. Es ist hieraus ebenfalls bekannt, über den Umfang einer solchen Düsenaustrittslippe äquidistant verteilt in radialer Richtung wirkende Stellelemente anzuordnen. Die Stellelemente sind Feldtranslatoren. Es handelt sich um elektrisch ansteuerbare Stellelemente, die den piezoelektrischen bzw. magnetostriktiven Effekt ausnutzen. Diese bekannten Maßnahmen haben sich sehr bewährt, jedoch können bei Einsatz von Feldtranslatoren sehr große Stellkräfte nicht aufgebracht werden. Im übrigen ist es bekannt, mit einer elastisch verformbaren Düsenaustrittslippe zur arbeiten, die mit Hilfe von in radialer Richtung wirkenden Stellelementen unter Vorspannung gesetzt wird, die zum Zwecke der Dickenfehlerkorrektur verändert wird. Überraschenderweise kann durch diese Maßnahmen eine sehr genaue Dickenregelung des Ringspaltes der Ringspaltdüse erreicht werden, und zwar, bezogen auch auf den Umfang, auch bereichsweise. - Zur Verstellung des Düsenspaltes von Breitschlitzdüsen sind Stellelemente mit einem umdrehungswinkelsteuerbaren Stellmotor bekannt, der über ein Untersetzungsgetriebe auf ein eine Düsenaustrittslippe bildendes, starres Bauteil arbeitet (JP-A 54146859 in Patent Abstracts of Japan, Vol. 4, No. 12 vom 29.1.1980).

Der Erfindung liegt die Aufgabe zugrunde, eine Vorrichtung anzugeben, die für eine regeltechnische Dickenfehlerkorrektur besonders geeignet ist.

Diese Aufgabe wird bei einer Vorrichtung der eingangs beschriebenen Gattung dadurch gelöst, daß die Düsenaustrittslippe eine Dicke von zumindest einigen Millimetern ausweist, daß die Stellelemente als Hochkraftstellelemente ausgebildet sind, die einen umdrehungswinkelsteuerbaren Stellmotor aufweisen, der mit einem Untersetzungsgetriebe ausgerüstet ist, und daß das Untersetzungsgetriebe über einen als Exzentertrieb ausgebildeten Treiber und eine Stellstange auf die Düsenaustrittslippe arbeitet. Im allgemeinen sind die Hochkraftstellelemente im Bereich des oberen Randes der Düsenaustrittslippe angeordnet und ist lediglich der Bereich des oberen Randes der Düsenaustrittslippe unter Vorspannung gesetzt. Nach einer bevorzugten Ausführungsform der Erfindung ist die Regeleinrichtung als Dickenprofilregeleinrichtung ausgebildet, mit der beim Aufwickeln der Blasfolie eine von störenden Faßreifen freie Coiloberfläche einregelbar ist. Dabei kann die Blasfolie flachgelegt und in doppelter Lage aufgewickelt werden, sie kann aber auch aufgetrennt und in einfachen Lagen aufgewickelt werden. Der Begriff Dickenfehlerregelung bezeichnet insbesondere Maßnahmen, wie sie in DE 37 40 087, DE 37 40 088 beschrieben sind, jedoch mit anderen Mitteln verwirklicht werden. Der Begriff Dickenregelung bezeichnet auch Maßnahmen, wie sie aus P 40 00 530.5 und aus P 40 13 611.6 gemäß PatG § 3(2) bekannt sind.

Hochkraftstellelemente bezeichnet Stellelemente, die bei hoher Laständerungsfrequenz und entsprechend kurzen Stellzeiten über einen langen Zeitraum in der Lage sind, die Düsenaustrittslippe, obgleich sie eine erhebliche Dicke aufweist, in der beschriebenen Weise mit unter Vorspannung zu setzen und in bezug auf die Ringspaltdicke feinfühlig und mit engen Toleranzen bei kleinen Stellzeiten genau einzurichten. Die Wanddicke der Düsenaustrittslippe liegt beispielsweise im Bereich von 3 bis 5 mm. Die Erstreckung in axialer Richtung beträgt z. B. 30 bis 60 mm. Das Aggregat aus Stellmotor, Untersetzungsgetriebe und Treiber ist zweckmäßigerweise als einheitliches Bauteil ausgeführt sowie im Bereich der Stellstange in eine Bauteilaufnahme in dem Strangpreßwerkzeug eingesetzt sowie in dieser durch zumindest eine Justierschraube justierbar. Dabei kann der Stellmotor als Schrittmotor ausgeführt sein. Um die Reibung zwischen dem Treiber und der Stellstange klein zu halten, weist nach einer bevorzugten Ausführungsform der Exzentertrieb eine Exzenterscheibe auf, auf die ein Wälzlager aufgesetzt ist. Die Düsenaustrittslippe kann zugleich als Rückstellfeder eingesetzt sein und entsprechend auf die Stellstange und den Treiber arbeiten.

Die Gestaltung des Blaskopfes ist im Rahmen der Erfindung, unter Beachtung der angegebenen Merkmale, weitgehend beliebig. Eine Ausführungsform, der im Rahmen der Erfindung besondere Bedeutung zukommt, ist dadurch gekennzeichnete, daß der Blaskopf eine äußere Düsenaustrittslippe aufweist, die von einem Ringraum von einigen Zentimetern Tiefe und Breite umgeben ist, wobei der Ringraum von einem Blaskopfkranz umgeben ist, der mit reduziertem Wärmeübergang an einen Bodenbereich des Ringraumes angeschlossen ist, und daß in dem Blaskopfkranz das Aggregat aus Stellmotor, Untersetzungsgetriebe und Treiber angeordnet ist. Diese Ausführungsform ist wegen des Ringraumes weitgehend unempfindlich in bezug auf Wärmedehnungen. Zwar treten solche auf, jedoch sind sie beherrschbar. Ist die Regeleinrichtung mit einem Rechner ausgerüstet, so kann dieser die Wärmeausdehnung berücksichtigen. Im einzelnen bestehen in bezug auf den vorstehend beschriebenen Blaskopf mehrere Möglichkeiten der weiteren Ausbildung und Gestaltung. Im allgemeinen überbrücken die Stellstangen den Ringraum. Der reduzierte Wärmeübergang kann in dem beschriebenen Anschlußbereich durch einen Kreis von Bohrungen und von zwischen den Bohrungen angeordneten dünnen Stegen verwirklicht sein. Die Aggregate aus Stellmotor, Untersetzungsgetriebe und Treiber sind nach bevorzugter Ausführungsform der Erfindung auf zwei Kreisen, von Kreis zu Kreis auf Lücke, um den Umfang des Blaskopfes verteilt angeordnet, wobei die Stellstangen radial zur Düsenaustrittslippe hin verlaufen. Diese Ausführungsform erlaubt eine große Vielzahl von Aggregaten des beschriebenen Aufbaus und der beschriebenen Funktion über den Umfang des Blaskopfes und damit der Ringspaltdüse zu verteilen. Die Stellstangen können aus einem schlecht wärmeleitenden und wärmedehnungsarmen Werkstoff hergestellt sein.

Bezüglich der baulichen Gestaltung bestehen im Rahmen der Erfindung ebenfalls mehrere Möglichkeiten. Insbesondere können die vorstehend beschriebenen Bauteile separat gefertigt und zum Blaskopf zusammengesetzt werden. Nach bevorzugter Ausführungsform der Erfindung bilden die Düsenaustrittslippe und der Blaskopfkranz ein einheitliches Bauteil, in dem der Ringraum angeordnet ist. Das einheitliche Bauteil ist zweckmäßigerweise mit einem Kragen versehen, mit dem es unter Zwischenschaltung eines Zentrierspaltes mit Zentrierschrauben auf ein Blaskopfunterteil aufgesetzt ist.

Im folgenden wird die Erfindung anhand einer lediglich ein Ausführungsbeispiel darstellenden Zeichnung ausführlicher erläutert. Es zeigen
- Fig. 1: das Schema eines erfindungsgemäßen Blaskopfes im Querschnitt,
- Fig. 2: in gegenüber der Fig. 1 wesentlich vergrößertem Maßstab den Ausschnitt A aus dem Gegenstand der Fig. 1,
- Fig. 3: den nochmals vergrößerten Ausschnitt B aus dem Gegenstand der Fig. 2 und
- Fig. 4: eine Draufsicht auf den Gegenstand der Fig. 2.

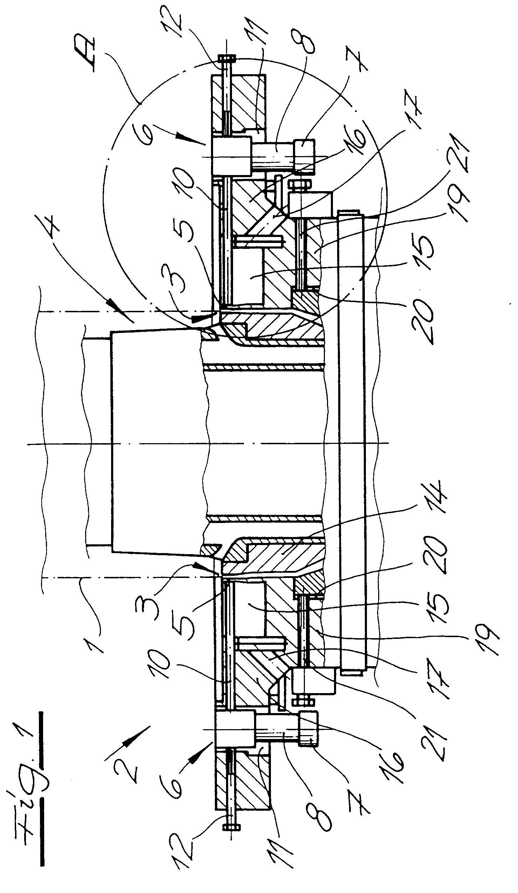

Die in den Figuren dargestellte Vorrichtung dient zur Herstellung einer Kunststoffolie aus thermoplastischem Kunststoff im sogenannten Folienblasverfahren. In der Fig. 1 ist eine solche Folienblase 1 angedeutet. Die Herstellung der Kunststoffolie erfolgt mit Dickenfehlerkorrektur im laufenden Betrieb. Dazu sind besondere Maßnahmen erforderlich, die weiter unten erläutert werden. In baulicher Gestaltung besteht die Vorrichtung in ihrem grundsätzlichen Aufbau aus einem Blaskopf 2, der eine Ringspaltdüse 3 aufweist, wobei außerdem eine Einrichtung 4 zum Aufblasen der Folienblase verwirklicht ist. Auch insoweit wird auf die Fig. 1 verwiesen.

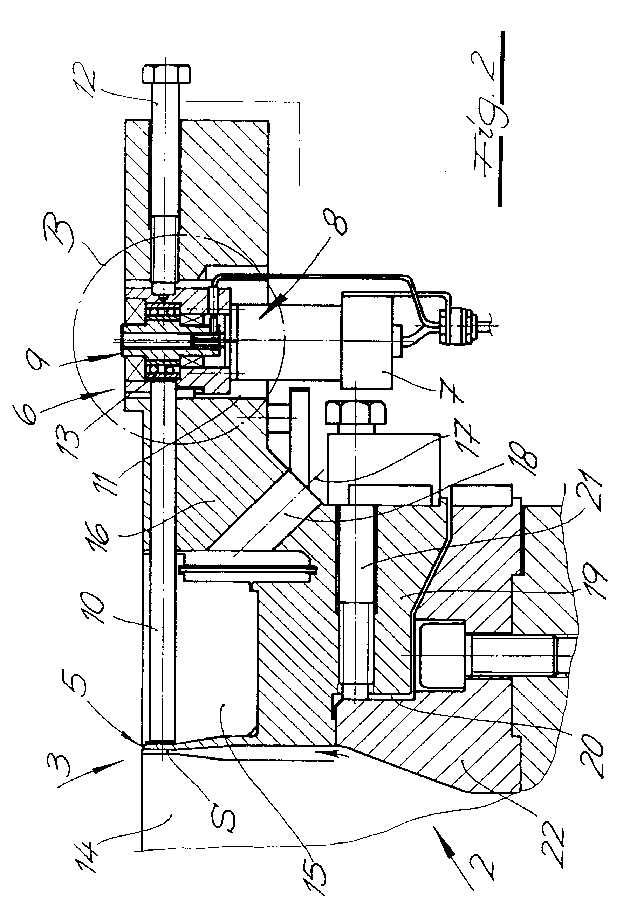

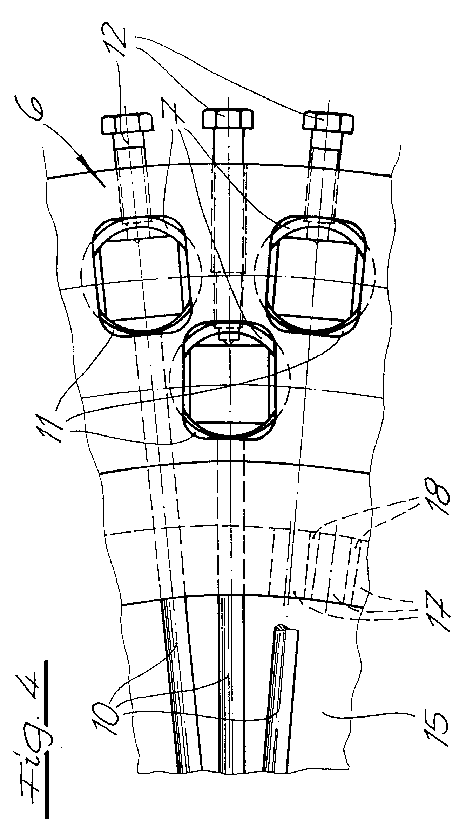

Insbesondere aus der Fig. 2 entnimmt man deutlich, daß die Ringspaltdüse 3 eine äußere Düsenaustrittslippe 5 aus Stahl aufweist. Die Düsenaustrittslippe 5 ist als ein im wesentlichen zylindrisches Bauteil von zumindest einigen Zentimetern Länge und zumindest einigen Millimetern Dicke ausgeführt. Im Ausführungsbeispiel und nach bevorzugter Ausführungsform der Erfindung liegt die Dicke der Düsenaustrittslippe 5 im Bereich zwischen 3 und 5 mm. Ihre Erstreckung in axialer Richtung liegt im Bereich zwischen 3 und 6 cm. Um den Umfang der Düsenaustrittslippe 5 sind äquidistant verteilt in radialer Richtung wirkende Hochkraftstellelemente 6 angeordnet. Insoweit wird auf eine vergleichende Betrachtung der Fig. 2 und 4 verwiesen. Die Anordnung ist so getroffen, daß die Ausgangsspaltdicke des Ringspaltdüsenspaltes S durch eine Vorspannung der Düsenaustrittslippe 5 eingestellt ist, die von den Hochkraftstellelementen 6 erzeugt ist. Im Ausführungsbeispiel wirken diese in radialer Richtung nach innen, so daß die Vorspannung eine Druckvorspannung ist. Die Hochkraftstellelemente 6 gehören einer Regeleinrichtung für die Dickenfehlerkorrektur an. Über die Hochkraftstellelemente 6 ist zum Zwecke der Dickenfehlerkorrektur die Vorspannung der Düsenaustrittslippe 5 veränderbar, und zwar nach Maßgabe von Dickenfehlermessungen an der Kunststoffolie oder nach Maßgabe von Konturmessungen an einem aus der Kunststoffolie gewickelten Coil und über den Umfang der Düsenaustrittslippe 5 auch unterschiedlich.

Im Ausführungsbeispiel sind die Hochkraftstellelemente 6 im Bereich des oberen Randes der Düsenaustrittslippe 5 angeordnet. Das bewirkt, daß im Ausführungsbeispiel lediglich der Bereich des oberen Randes der Düsenaustrittslippe 5 unter Vorspannung gesetzt ist. Die Regeleinrichtung ist als Dickenregeleinrichtung ausgebildet, mit der beim Aufwickeln der Blasfolie in doppelter Lage nach Flachlegen oder in einfacher Lage nach Auftrennen eine von störenden Faßreifen freie Coiloberfläche des beim Aufwickeln sich bildenden Coils einregelbar ist.

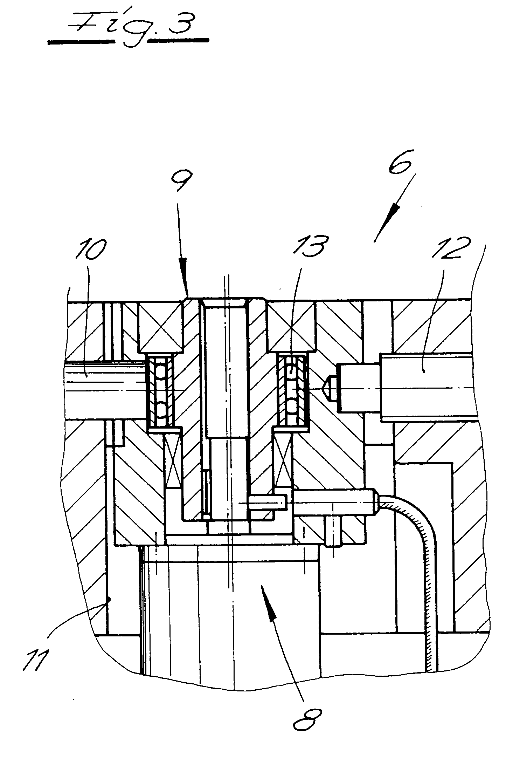

Aus einer vergleichenden Betrachtung der Fig. 2 und 3 entnimmt man, daß die Hochkraftstellelemente 6 einen umdrehungswinkelsteuerbaren Stellmotor 7 aufweisen, der mit einem Untersetzungsgetriebe 8 ausgerüstet ist. Das Untersetzungsgetriebe 8 arbeitet über einen Treiber 9 und eine Stellstange 10 auf die Düsenaustrittslippe 5. Das Aggregat aus Stellmotor 7, Untersetzungsgetriebe 8 und Treiber 9 ist als einheitliches Bauteil ausgeführt. Es ist im Bereich der Stellstange 10 in eine Bauteilaufnahme 11 eingesetzt und in dieser durch zumindest eine Justierschraube 12 justierbar. Der Stellmotor 7 mag als Schrittmotor ausgeführt sein. Der Treiber 9 ist im Ausführungsbeispiel als Exzentertrieb ausgebildet. Der Exzentertrieb weist eine Exzenterscheibe auf, auf die ein Wälzlager 13 aufgesetzt ist. Dadurch werden Reibungskräfte zwischen dem Treiber 9 und der Stellstange 10 vermieden. Die Düsenaustrittslippe 5 funktioniert zugleich als Rückstellfeder.

Betrachtet man die Fig. 2 und 4, so erkennt man, daß der Blaskopf 2 eine äußere Düsenaustrittslippe 5 aufweist, die gleichsam den Blaskopfkern 14 umgibt. Diese Düsenaustrittslippe 5 ist von einem Ringraum 15 von einigen Zentimetern Tiefe und Breite umgeben. Der Ringraum 15 ist seinerseits von einem Blaskopfkranz 16 umgeben, der, mit reduziertem Wärmeübergang an einen Bodenbereich des Ringraumes 15 angeschlossen ist. In dem Blaskopfkranz 16 ist das Aggregat aus Stellmotor 7, Untersetzungsgetriebe 8 und Treiber 9 angeordnet. In der Fig. 2 erkennt man, daß die Stellstangen 10 den Ringraum 15 überbrücken. Sie sind in der Wand, die den Ringraum 15 begrenzt, geführt. Der reduzierte Wärmeübergang ist durch einen Kranz von Bohrungen 17 und zwischen den Bohrungen 17 angeordneten dünnen Stegen 18 verwirklicht. Die Fig. 4 macht deutlich, daß die Aggregate aus Stellmotor 7, Untersetzungsgetriebe 8 und Treiber 9 auf zwei Kreisen und von Kreis zu Kreis auf Lücke um den Umfang des Blaskopfes 2 verteilt angeordnet sind. Die Stellstangen 10 verlaufen radial zur Düsenaustrittslippe 5 hin. Auf diese Weise können die Stellstangen 10 gleichsam dicht an dicht an der Düsenaustrittslippe 5 zur Erzeugung und Veränderung der Vorspannung angreifen.

Im Ausführungsbeispiel und nach bevorzugter Ausführungsform der Erfindung bilden die Düsenaustrittslippe 5 und der Blaskopfkranz 16 ein einheitliches Bauteil, in dem der Ringraum 15 angeordnet ist. Das einheitliche Bauteil weist einen Kragen 19 auf, mit dem es unter Zwischenschaltung eines Zentrierspaltes 20 mit Zentrierschrauben 21 auf ein Blaskopfunterteil 22 aufgesetzt ist.

## Patentansprüche

1. Vorrichtung für die Herstellung einer Kunststoffolie aus thermoplastischem Kunststoff im Folienblasverfahren mit Dickenfehlerkorrektur im laufenden Betrieb, - mit einem Blaskopf (2), der eine Ringspaltdüse (3) aufweist, und mit einer Einrichtung (4) zum Aufblasen der Folienblase (1),
wobei die Ringspaltdüse (3) eine äußere und/oder innere Düsenaustrittslippe (5) aus Stahl aufweist, welche Düsenaustrittslippe (5) als ein im wesentlichen zylindrisches Bauteil von zumindest einigen Zentimetern Länge ausgeführt und elastisch verformbar ist,
wobei um den Umfang der Düsenaustrittslippe (5) äquidistant verteilt in radialer Richtung wirkende Stellelemente angeordnet sind,
wobei die Ausgangsspaltdicke des Ringspaltdüsenspaltes (S) durch eine Vorspannung der Düsenaustrittslippe (5) eingestellt ist, die von den Stellelementen erzeugt ist, und
wobei die Stellelemente einer Regeleinrichtung für die Dickenfehlerkorrektur angehören sowie über die Stellelemente zum Zwecke der Dickenfehlerkorrektur die Vorspannung der Düsenaustrittslippe (5) veränderbar ist, **dadurch gekennzeichnet**, daß die Düsenaustrittslippe (5) eine Dicke von zumindest einigen Millimetern aufweist, daß die Stellelemente als Hochkraftstellelemente (6) ausgebildet sind, die einen umdrehungswinkelsteuerbaren Stellmotor (7) aufweisen, der mit einem Untersetzungsgetriebe (8) ausgerüstet ist, und daß das Untersetzungsgetriebe (7) über einen als Exzentertrieb ausgebildeten Treiber (9) und eine Stellstange (10) auf die Düsenaustrittslippe (5) arbeitet.

2. Vorrichtung nach Anspruch 1, wobei die Hochkraftstellelemente (6) im Bereich des oberen Randes der Düsenaustrittslippe (5) angeordnet sind und lediglich der Bereich des oberen Randes der Düsenaustrittslippe (5) unter Vorspannung gesetzt ist.

3. Vorrichtung nach einem der Ansprüche 1 oder 2, wobei die Regeleinrichtung als Dickenprofilregeleinrichtung ausgebildet ist, mit der beim Aufwickeln der Blasfolie eine von störenden Faßreifen freie Coiloberfläche einregelbar ist.

4. Vorrichtung nach einem der Ansprüche 1 bis 3, wobei das Aggregat aus Stellmotor (7), Untersetzungsgetriebe (8) und Treiber (9) als einheitliches Bauteil ausgeführt sowie im Bereich der Stellstange (10) in eine Bauteilaufnahme (11) eingesetzt ist und in dieser durch zumindest eine Justierschraube (12) justierbar ist.

5. Vorrichtung nach einem der Ansprüche 3 oder 4, wobei der Stellmotor (7) als Schrittmotor ausgeführt ist.

6. Vorrichtung nach Anspruch 1, wobei der Exzentertrieb eine Exzenterscheibe aufweist, auf die ein Wälzlager (13) aufgesetzt ist.

7. Vorrichtung nach einem der Ansprüche 1 bis 6, wobei die Düsenaustrittslippe (5) zugleich als Rückstellfeder eingesetzt ist.

8. Vorrichtung nach einem der Ansprüche 1 bis 7, wobei der Blaskopf (2) eine äußere Düsenaustrittslippe (5) aufweist, die von einem Ringraum (15) von einigen Zentimetern Tiefe und Breite umgeben ist, wobei der Ringraum (15) seinerseits von einem Blaskopfkranz (16) umgeben ist, der mit reduziertem Wärmeübergang an einen Bodenbereich des Ringraumes (15) angeschlossen ist, und wobei in dem Blaskopfkranz (16) das Aggregat aus Stellmotor (7), Untersetzungsgetriebe (8) und Treiber (9) angeordnet ist.

9. Vorrichtung nach Anspruch 8, wobei die Stellstangen (10) den Ringraum (15) überbrücken.

10. Vorrichtung nach einem der Ansprüche 8 oder 9, wobei der reduzierte Wärmeübergang durch einen Kranz von Bohrungen (17) und zwischen den Bohrungen (17) angeordneten dünnen Stegen (18) verwirklicht ist.

11. Vorrichtung nach einem der Ansprüche 8 bis 10, wobei die Aggregate aus Stellmotor (7), Untersetzungsgetriebe (8) und Treiber (9) auf zwei Kreisen und von Kreis zu Kreis auf Lücke um den Umfang des Blaskopfes (2) verteilt angeordnet sind sowie die Stellstangen (10) radial zur Düsenaustrittslippe (5) hin verlaufen.

12. Vorrichtung nach einem der Ansprüche 8 bis 11, wobei die Düsenaustrittslippe (5) und der Blaskopfkranz (16) ein einheitliches Bauteil bilden, in dem der Ringraum (15) und die Bohrungen (17) angeordnet sind.

13. Vorrichtung nach einem der Ansprüche 8 bis 12, wobei das einheitliche Bauteil einen Kragen (19) aufweist, mit dem es unter Zwischenschaltung eines Zentrierspaltes (20) und mit Zentrierschrauben (21) auf ein Blaskopfunterteil (22) aufgesetzt ist.

## Claims

1. An apparatus for producing a film of synthetic material from synthetic thermoplastic material by the film-blowing process with thickness error correction in continuous operation, having a blowing head (2) which comprises an annular gap extrusion die (3), and having a device (4) for inflating the blown film (1),
wherein the annular gap extrusion die (3) has an outer and/or inner die outlet lip (5) made of steel, which die outlet lip (5) is constructed as a substantially cylindrical component of length at least a few centimetres and is elastically deformable,
wherein adjusting elements acting radially are disposed equidistantly distributed around the periphery of the die outlet lip (5),
wherein the initial gap thickness of the annular gap extrusion die gap (S) is adjusted by a prestressing of the die outlet lip (5) which is produced by the adjusting elements, and
wherein the adjusting elements form part of a regulating device for the correction of thickness errors, and wherein the prestressing of the die outlet lip (5) can be varied by way of the adjusting elements for the purpose of correcting thickness errors, characterised in that the die outlet lip (5) has a thickness of at least a few millimetres, that the adjusting elements are constructed as high-force adjusting elements (6) which comprise a servomotor (7) having a controllable angle of rotation which is equipped with a step-down transmission (8), and that the step-down transmission (8) acts on the die outlet lip (5) via a driver (9) constructed as an eccentric drive and an adjusting rod (10).

2. An apparatus according to claim 1, wherein the high-force adjusting elements (6) are disposed in the region of the upper edge of the die outlet lip (5) and only the region of the upper edge of the die outlet lip (5) is placed under prestress.

3. An apparatus according to either one of claims 1 or 2, wherein the regulating device is constructed as a thickness profile regulating device by means of which a coil surface free from troublesome barrel hoops can be achieved when winding up the blown film.

4. An apparatus according to any one of claims 1 to 3, wherein the unit comprising the servomotor (7), the step-down transmission (8) and the driver (9) is designed as a unified unit and can be inserted in a component receiver (11) in the region of the adjusting rod (10) and can be adjusted in the said receiver by at least one adjusting screw (12).

5. An apparatus according to either one of claims 3 or 4, wherein the servomotor (7) is designed as a stepper motor.

6. An apparatus according to claim 1, wherein the eccentric drive has an eccentric disc on which a rolling bearing (13) is mounted.

7. An apparatus according to any one of claims 1 to 6, wherein the die outlet lip (5) is used at the same time as a readjusting spring.

8. An apparatus according to any one of claims 1 to 7, wherein the blowing head (2) has an outer die outlet lip (5) which is surrounded by an annular gap (15) of a few centimetres depth and width, wherein the annular gap (15) is itself surrounded by a blowing head ring (16) which is attached to a base region of the annular gap (15) with reduced heat transfer, and wherein the unit comprising the servomotor (7), the step-down transmission (8) and the driver (9) is disposed in the blowing head ring (16).

9. An apparatus according to claim 8, wherein the adjusting rods (10) bridge the annular gap (15).

10. An apparatus according to either one of claims 8 or 9, wherein the reduced heat transfer is achieved by a ring comprising bores (17) and thin bridges (18) disposed between the bores (17).

11. An apparatus according to any one of claims 8 to 10, wherein the units comprising the servomotor (7) the step-down transmission (8) and the driver (9) are disposed on two circles and are disposed from circle to circle distributed on gaps around the periphery of the blowing head (2), and wherein the adjusting rods (10) extend radially towards the die outlet lip (5).

12. An apparatus according to any one of claims 8 to 11, wherein the die outlet lip (5) and the blowing head ring (16) form a unified component in which the annular gap (15) and the bores (17) are disposed.

13. An apparatus according to any one of claims 8 to 12, wherein the unified component has a collar (19) with which it is placed on a blowing head lower part (22) with a centring gap (20) disposed therebetween and with centring screws (21).

## Revendications

1. Dispositif de fabrication d'une feuille de matière thermoplastique par le procédé d'extrusion-soufflage de feuilles avec une correction de l'erreur d'épaisseur pendant le fonctionnement, comprenant une tête de soufflage (2) équipée d'une filière annulaire (3), et un dispositif (4) pour le soufflage de la bulle de feuille (1), la filière annulaire (3) présentant une lèvre de sortie de filière (5) extérieure et/ou intérieure en acier, ladite lèvre de sortie de filière (5) étant réalisée sous la forme d'un élément sensiblement cylindrique d'une longueur d'au moins quelques centimètres et élastiquement déformable, des éléments de réglage agissant dans le sens radial étant répartis à égales distances sur la périphérie de la lèvre de sortie de filière (5), l'épaisseur de la fente de sortie (S) de la filière annulaire étant réglée par une mise en précontrainte de la lèvre de sortie de filière (5) réalisée par les éléments de réglage, et les éléments de réglage appartenant à un dispositif de réglage pour la correction de l'erreur d'épaisseur et la précontrainte de la lèvre de sortie de filière (5) pouvant être variée par l'intermédiaire desdits éléments de réglage, **caractérisé en ce** que la lèvre de sortie de filière (5) présente une épaisseur d'au moins quelques millimètres, que les éléments de réglage sont conformés en éléments de réglage (6) de forte puissance munis d'un servomoteur (7) qui peut être commandé en angle de rotation et est équipé d'un réducteur (8), et que le réducteur (8) agit sur la lèvre de sortie de filière (5) par l'intermédiaire d'un actionneur (9) conformé en commande à excentrique et d'une broche de réglage (10).

2. Dispositif selon la revendication 1, caractérisé en ce que les éléments (6) de forte puissance sont disposés dans la région du bord supérieur de la lèvre de sortie de filière (5), et que seule la région du bord supérieur de la lèvre de sortie de filière (5) est mise en précontrainte.

3. Dispositif selon l'une des revendications 1 ou 2, caractérisé en ce que le dispositif de réglage est conformé en dispositif de réglage du profil d'épaisseur qui permet, lors de l'enroulement de la feuille soufflée, de régler une surface de bobine exempte de déformations gênantes en cerceau.

4. Dispositif selon l'une quelconque des revendications 1 à 3, caractérisé en ce que le groupe comprenant le servomoteur (7), le réducteur (8) et l'actionneur (9) est réalisé sous la forme d'un ensemble homogène et monté, dans la région de la broche de réglage (10), dans un logement (11) dans lequel il peut être ajusté par au moins une vis d'ajustage (12).

5. Dispositif selon l'une des revendications 3 ou 4, caractérisé en ce que le servomoteur (7) est réalisé sous la forme d'un moteur pas à pas.

6. Dispositif selon la revendication 1, caractérisé en ce que la commande à excentrique comprend un disque à excentrique sur lequel est disposé un roulement (13).

7. Dispositif selon l'une quelconque des revendications 1 à 6, caractérisé en ce que la lèvre de sortie de filière (5) sert en même temps de ressort de rappel.

8. Dispositif selon l'une quelconque des revendications 1 à 7, caractérisé en ce que la tête de soufflage (2) comporte une lèvre de sortie de filière (5) extérieure qui est entourée par un espace annulaire (15) d'une profondeur et d'une largeur de quelques centimètres, que l'espace annulaire (15) est entouré à son tour par une couronne de tête de soufflage (16) laquelle est rattachée, avec un transfert de chaleur réduit, à une section de fond de l'espace annulaire (15), et que le groupe comprenant le servomoteur (7), le réducteur (8) et l'actionneur d'attaque (9) est monté dans la couronne de tête de soufflage (16).

9. Dispositif selon la revendication 8, caractérisé en ce que les broches de réglage (10) franchissent l'espace annulaire (15).

10. Dispositif selon l'une des revendications 8 ou 9, caractérisé en ce que le transfert de chaleur réduit est réalisé par une couronne d'alésages (17) et des minces barrettes (18) entre les alésages (17).

11. Dispositif selon l'une quelconque des revendications 8 à 10, caractérisé en ce que les groupes formés par le servomoteur (7), le réducteur (8) et l'actionneur (9) sont répartis sur deux cercles et, avec un espace d'un cercle à l'autre, autour de la tête de soufflage (2) et que les broches de réglage (10) s'étendent radialement par rapport à la lèvre de sortie de filière (5).

12. Dispositif selon l'une quelconque des revendications 8 à 11, caractérisé en ce que la lèvre de sortie de filière (5) et la couronne de tête de soufflage (16) forment un élément homogène dans lequel sont disposés l'espace annulaire (15) et les alésages (17).

13. Dispositif selon l'une quelconque des revendications 8 à 12, caractérisé en ce que l'élément homogène comporte un collet (19) à l'aide duquel il est mis en place sur un élément inférieur (22) de la tête de soufflage, avec interposition d'une fente de centrage (20) et de vis de centrage (21).
